# EUROPEAN PATENT APPLICATION

(11) **EP 3 957 186 A1**
(43) Date of publication of application: **23.02.2022**
(21) Application number: 21190625.0
(22) Date of filing: 10.08.2021
(51) Int. Cl.: A23L 3/18, F26B 17/20, F26B 3/22, F26B 21/02, F26B 21/06, F26B 23/10, A23L 3/22, F26B 3/24, F28F 5/06

(54) **HEAT TREATMENT DEVICE FOR THERMAL FLOW TREATMENT OF SOLID FOOD, FEED AND VARIOUS BULK PRODUCTS**

(30) Priority: 10.08.2020 DE 102020121017
(71) Applicant: TechniGrau Solutions Ltd., 60200 Compiègne (FR)
(72) Inventor: GUZUN, Tatiana, 60200 Compiegne (FR); Diogo, Carlos, Alberto, Ramos, 27775-713 Carcavelos (PT)
(74) Representative: Tarvenkorn, Oliver

(57) **Abstract**

A method for thermal flow treatment of solid food or fodder comprises at least the following steps:
- laying in the food or fodder at an inlet port (11) and
- conveying the substance between from the inlet port (11) through an elongated chamber (13) encapsulated by a housing (10) to an outlet port (12) by a rotating heated spiral conveyor means (20) comprising at least one helical web (22) attached to a shaft (21).

The food or fodder is tempered by direct contact to the web (22) of the conveyor means (20), wherein the web (22) is tempered by a fluid which is internally led through at least one fluid flow channel in the shaft (21) and inversely to the direction of flow of the solid food or fodder inside the chamber (13) . The temperature of the shaft (21) and/or the web (22) is controlled by the temperature and/or the flow rate of the fluid passing the fluid flow channel. The preferred fluid for tempering is steam.

## Description

The invention relates to a heat treatment method for the thermal flow treatment of solid food or fodder, according to the preamble of claim 1, and a heat treatment method for thermal flow treatment of solid food or fodder and heat treatment device for carrying out the method

Food and feed such as crops, fruits, spices, herbs, cereals, fibers, seeds or nuts or other products like minerals and salts must often be subjected to a heat treatment, with different applications goals. One application may be to reduce the contaminations by microorganisms, food, fodder and various bulk products. For example, black pepper is highly germ-contaminated. Other applications are drying solid food with a minimum loss on techno-functional properties and/or drying in order to control the moisture and to stabilize the flavor and/or texture and shelf life of products.

The heat treatment is often carried out in batches in closed containers. The badge process can be well controlled, and other influences such as the application of a vacuum to the process container or introduction of inert gas can be exercised. However, the time-related capacity is limited in batch operations and therefore often uneconomical.

Also the heat treatment can be done in continuous way as per US 10 598 435 B1 and US 6375345 B1, each describe a device for applying heat treatment to a substance, the device comprising an enclosure, conveyor means for conveying the substance between an inlet of the enclosure and an outlet of the enclosure, the means for conveying the substance comprising a screw mounted to rotate inside the enclosure about an axis of rotation and having drive means for driving the screw in rotation, and heater means for heating the screw by the Joule effect i.e. converting electric energy in thermal energy based on spiral material resistivity.

In order to avoid any electric arc with chamber auge, the insulation material as Teflon is used. The last one has a lot of debates about safety due to potential migration of dangerous molecules to the product or to contaminate with small chips or powder of this macro-polymer obtained during the friction of electric screw and polymer itself, which might be dangerous for the consumer. Moreover, the electric arcs my conduct to the fire of this insulator and equipment itself.

The object of the invention is thus to carry out an innovative heat treatment method and to better control and monitor it without using any other polymer and/or macro-polymer for insulation and to use only steam or other fluid, instead of electrical heating (Joule effect), as a source of heating of conveying and heating screw or spire in close or open devise. It is a further object of the invention to provide a heat treatment device for carrying out the heat treatment method.

This object is achieved by a heat treatment method having the features of claim 1 and a heat treatment method having the features of claim 7.

The method can be used for sterilization, blanching and drying of solid food, feed and various bulk products.

According to the invention, the heating of the product as well as maintaining the heat treatment temperature takes place during the passage of the product through an inner chamber thanks to heating by steam or other fluid lead threw the spiral conveyor element. So, the spiral conveyor element has got two roles which are both to convey and to heat the product, meanwhile avoiding any condensation phenomena.

Due to the diameter of the screw or spire and the height of the webs of the internally mounted screw conveyor, the height of the bed can be influenced.

An advantage of the heat treatment method according to the invention is that they are heated by direct contact to the webs of the screw conveyor.

Essential to the invention is therefore the heating of the product by contact to a heated conveyor element which has got at least one web in the wound-up form of a spiral, screw or helix wherein the conveyor element is internally heated by a flow of a tempered fluid. The fluid can be a gaseous or liquid fluid.

Preferably, heating is effected by steam which is advantageous because steam generators are widely available in food industry.

In general, gaseous liquids are preferred as tempering fluid because in a heat treatment method using the heat treatment device of the invention both the heating rate of the conveyor element as well as the final temperature to be obtained can be controlled very well. There are two parameters to be controlled which are the temperature of the fluid itself and also by the flow rate of the fluid.

The flow rate can easily be controlled by providing a controllable element like a valve or nozzle which is arranged downstream in the fluid line. Given a pump which is circulating the tempering fluid in the line and which is operating at constant power the pressure can be influenced by partially closing and opening the valve or by intermittently opening and closing it fully thereby reducing the flow rate of the fluid through the spiral conveyor element.

Thus, the current temperature acting on the product is already known very precisely by the preselection of the heating fluid temperature and its flow rate.

It is another advantage of the invention that heat losses can be avoided by recompensating the heating fluid which simply can be reused and reheated in a heating circuit.

Furthermore, the chamber walls can be heated or cooled as well thereby increasing the contact area with the product significantly. The chamber walls can be made in form of a double wall with a hollow space between and an insulating layer on the outside. The chamber walls can be heated in the same manner as the spiral conveyor or differently by any other heating fluid like gas, hot air, water or oil.

Preferably, the section of chamber walls which can be tempered by a fluid run exactly where the product fill begins which is in the bottom area of the chamber. So at least a part of the chamber wall can be preheated with a certain hot air temperature or not.

This chamber can be stationary or in a movement directly below the product bed due to rotation or vibration.

In still another embodiment of the invention means can be provided to blow steam or any other kind of gas like hot air or ozone directly into the chamber, wherein a special suction device adapted to each kind of gas is additionally provided on the housing.

In order to improve and to control better of the chamber temperature, at least one chamber temperature sensor may be provided, which is arranged in particular at the outlet end of the chamber, because the conveyed product there has reached the temperature of the chamber walls and heated screw which increasing exponentially due the product own conductivity is highest there.

On the one hand, a regulation of the temperature of the fluid ensures that the product temperature is sufficiently high, and treatment is performed sufficiently long. On the other hand, it allows a significant energy saving because no permanent overheating needs to be effected just to make sure that desired product quality is guaranteed.

If it is determined by measurement that the temperature of the chamber walls and/or the spiral conveyor element is sufficiently high, the fluids temperature and / or quantity is controlled down.

The advantage of using wall heating in combination with heated by fluid screw and/or spire is that not only the temperature, but also the air velocity is to be controlled easily, so that the heat input is easy to control without any possible hot spots dangerous for sensitive products.

Besides by heating the product by steam, the device can also be used for temporary cooling of the chamber and it is possible to set a drum temperature from 0 to 100 °C, without accumulating condensate. For this purpose, a liquid is used for tempering the spiral conveyor element and the chamber walls.

Particularly advantageous is a development of the heat treatment device and method according to the invention by at least five other temperature sensors, which are distributed over the length of the chamber with steam heated screw in combination or not with its walls.

Due to the individual thermal conductivity of each product to be treated the heating will be exponential and without any different hottest point per spiral of screw thanks to homogeneous heating of any warmed by steam surface.

The tempering of the product in the invention thus takes place primarily by the contact of the product with the heated screw and/or sterilizer chamber wall(s), although optional additional steam, or other kind of gas like hot air and/or ozone can be blown into the drum to amplify the efficiency of the targeted treatment, thorough sterilization and / or to influence the moisture, the color, etc. of the product during the heat treatment phase.

A preferred product to be treated with the method and the device of the invention is a low moisture food which has a bulk density from 0,1 g/cm3 to 1.0 g / cm3, a moisture content up to 30% and an temperature at input from 0° to 50°C.

The heating of the spiral conveyor element can be performed by all kinds of steam like wet, dry and superheated steam in a temperature range from 100 °C to 200 °C. Consequently, the temperature of the screw at its beginning and at the end is within a range from 100 °C to 200 °C as well.

The pitch and the rotational speed of the conveyor element are selected in accordance with the residence time of the product within the chamber which is typically in the range from 1 min to 30 min.

The invention will be explained in more detail with reference to the drawings. The figures show:
- Fig. 1: a heat treatment device in a perspective view;
- Fig. 2: an opened part of the device in the vicinity of an inlet;
- Fig. 3: an opened part of the device in the vicinity of an outlet and a drive unit; and
- Fig. 4: a spiral conveyor element in perspective view.

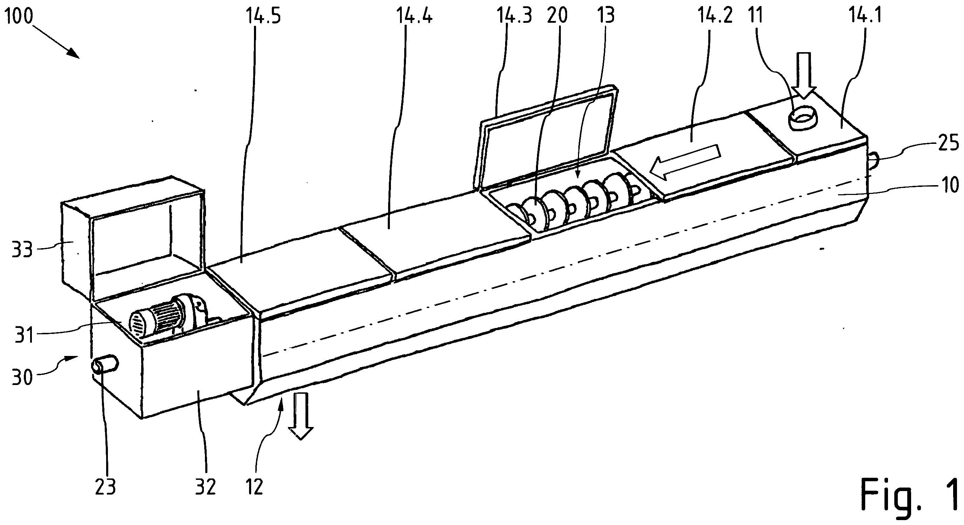

Fig. 1 shows a heat treatment device 100 pursuant to the invention in a perspective view which essentially comprises:
- a housing 10 which is open at the top;
- a spiral conveyor element 20 which is rotatably mounted in the housing 11 and
- a drive unit 30 with an electrical motor 31 for rotating the conveyor element 20.

The topside opening of the housing 10 is covered with a series of cover elements 14.1 ... 14.5 so that at least one enclosed inner chamber 13 is provided when all cover elements 14.1 ... 14.5 are closed. The division of the housing cover in multiple cover elements 14.1 ... 14.5 provides easy access to different zones of the heat treatment device 100.

A first cover element 14.1 has got an inlet port 11 where the product to be treated is laid in. The spiral conveyor element 20 effects that the product is conveyed along the housing to an outlet port 12 which is situated in the bottom of the housing 10 at a downstream end under the cover element 14.5.

The drive unit 30 comprises the motor 31 which is encapsulated in a housing 32 having a closure element 33 which are attached to but the housing 10. The interior of the drive unit 30 is separated from the chamber 13.

Furthermore, a steam pipe input 23 and a steam pipe output 25 are provided.

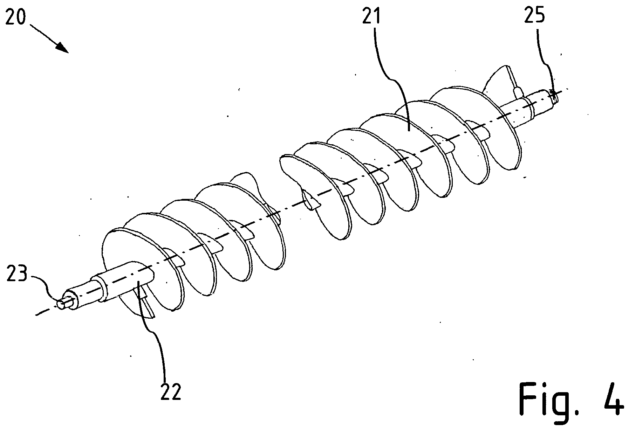

The conveyor element 20 is illustrated in figure 4 in greater detail. Basically, it comprises a linear central shaft 21 which is surrounded by at least one helical, spiral web 22. The orientation of the spiral web 22 and the direction of rotation effected by the drive unit 30 are such that the product is conveyed to the downstream section at cover element 14.5 (cf. fig. 1).

Besides the shaft 21 has got at least one internal bore or channel for a temporized fluid like steam so that the shaft 21 also constitutes a steam pipe which extends from a steam pipe input 23 to a steam pipe output 25.

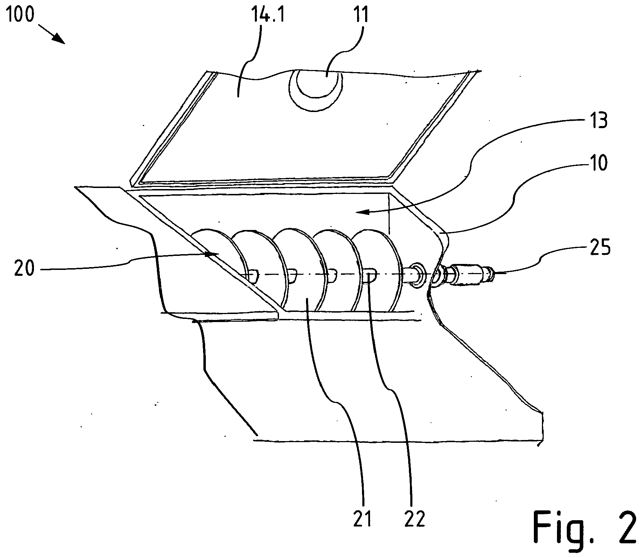

Figure 2 shows an upstream end of the device 100. The cover element 14.1 with the inlet port 11 is partially lifted so that the upstream end of the chamber 13 and the spiral conveyor element 20 is visible. The shaft 21 extends throw a front end of the housing 10 where it ends with steam pipe output 25.

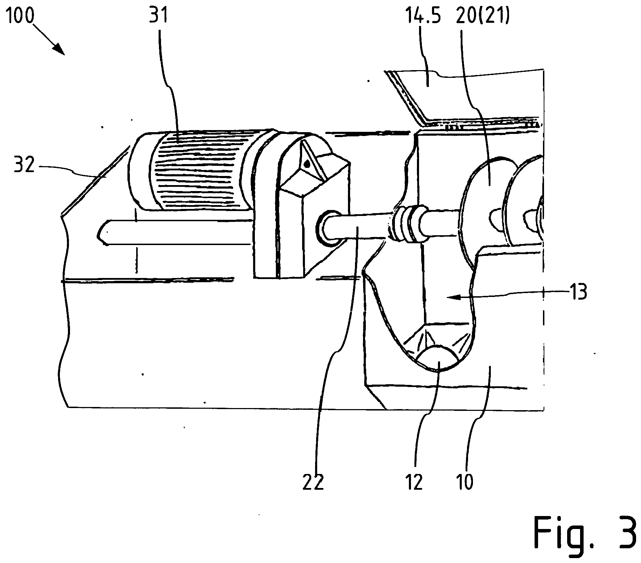

In Figure 3 the downstream end of the housing 10 with the attached drive unit 30 is illustrated. The shaft 22 of the conveyor element 20 extends from the steam pipe inlet 23 (cf. fig. 1) through the drive unit 30 and through the wall which is separating the drive unit from the chamber 13 in the housing 10.

Heat treatment of solid food or animal feed by using of the heat treatment device 100 is carried out as follows:
The product flow of the solid food or fodder in the heat treatment device 100 from inlet port 11 to outlet port 12 is indicated by the bold arrows in figure 1. The flow direction of a heating fluid which is led through the shaft 21 of the spiral conveyor element 20 is inverse to the product flow direction. The heating fluid is inserted at the fluid inlet port 23 and exits from the shaft at the fluid outlet port 25. Because of the inverse directions of the solid product flow direction and the flow direction of the heating fluid the temperature at the inlet port is lowest and highest at the outlet port. Thus, the product laid in at inlet port 11 is increasingly heated on its way through the chamber 13 reaching its highest temperature at downstream end of chamber 13 at outlet port 12.

### List of numerals

- 100: heat treatment device

- 10: housing
- 11: inlet port
- 12: outlet port
- 13: inner chamber
- 14.1 - 14.5: cover elements

- 20: spiral conveyor element
- 21: web
- 22: shaft
- 23: fluid inlet port
- 25: fluid outlet port

- 30: drive unit
- 31: motor
- 32: housing
- 33: closure

## Claims

1. Method for thermal flow treatment of solid food or fodder, the method comprising at least the following steps:
- laying in the food or fodder at an inlet port (11);
- conveying the substance between from the inlet port (11) through an elongated chamber (13) encapsulated by a housing (10) to an outlet port (12) by a rotating heated spiral conveyor means (20) comprising at least one helical web (22) attached to a shaft (21)
**characterized in that** the food or fodder is tempered by direct contact to the web (22) of the conveyor means (20), wherein the web (22) is tempered by a fluid which is internally led through at least one fluid flow channel in the shaft (21) and inversely to the direction of flow of the solid food or fodder inside the chamber (13) and
and **in that** the temperature of the shaft (21) and/or the web (22) is controlled by the temperature and/or the flow rate of the fluid passing the fluid flow channel.

2. Method as in claim 1, **characterized in that** a gaseous fluid is used for heating the spiral conveyor means (20).

3. Method as in claim 2, **characterized in that** steam is used for heating the spiral conveyor means (20).

4. Method as in any of claims 1 to 3, **characterized in that** the flow rate of the fluid circulating in the flow channel is controlled by at least one valve arranged at a downstream end of the spiral conveyor means (20) and/or of a subsequent fluid line.

5. Method as in any of claims 1 to 4, **characterized in that** at least a part of the walls of the housing (10) enclosing the chamber (13) are tempered by a fluid.

6. Method as in any of claims 5, **characterized in that** both the conveyor means (20) and the walls of the housing (10) are heated by steam.

7. Heat treatment device (100) for carrying out the method as defined in any of the preceding claims, the device comprising at least:
- a housing (10) encompassing an elongated inner chamber (13), the housing having at least one inlet port (11) and one outlet port (12);
- a spiral conveyor means (20) for conveying the substance from the inlet port (11) to the outlet port (12), wherein the conveyor means (20) is rotatably mounted to rotate about an axis of rotation in the chamber (13);
- a drive means (30) for rotating the conveyor means (20);
wherein the conveyor means (20) comprises a shaft (21) and least one helical web (22) attached to the shaft (21) which is provided with at least one flow channel for circulation of a heated fluid.

8. Device (100) as in claim 8, **characterized in that** the shaft (21) has a fluid inlet port (23) at an end in the vicinity of the outlet port (12) and a fluid outlet port (25) in the vicinity of the inlet port (12).

9. Device (100) as in claim 8 or 9, **characterized in that** at least a part of the walls of the housing (10) which are enclosing the chamber (13) are hollow to form a fluid flow channel and/or are connected to at least one fluid pipe enabling heat transfer to the inside of the chamber (13).
